(19) Europäisches Patentamt
European Patent Office
Office européen des brevets

(11) EP 4 459 733 A1

(12) **EUROPEAN PATENT APPLICATION**
published in accordance with Art. 153(4) EPC

(43) Date of publication:
**06.11.2024 Bulletin 2024/45**

(21) Application number: **22914210.4**

(22) Date of filing: **13.12.2022**

(51) International Patent Classification (IPC):
***H01M 10/0567** (2010.01)*

(52) Cooperative Patent Classification (CPC):
**H01M 10/0525; H01M 10/0567; H01M 10/0568; H01M 10/0569; H01M 10/42;** Y02E 60/10

(86) International application number:
**PCT/CN2022/138541**

(87) International publication number:
**WO 2023/124955 (06.07.2023 Gazette 2023/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.12.2021 CN 202111623315**

(71) Applicant: **Shenzhen Capchem Technology Co., Ltd.**
**Shenzhen, Guangdong 518118 (CN)**

(72) Inventors:
- **QIAN, Yunxian**
**Shenzhen, Guangdong 518118 (CN)**
- **HU, Shiguang**
**Shenzhen, Guangdong 518118 (CN)**
- **DENG, Yonghong**
**Shenzhen, Guangdong 518118 (CN)**
- **LIU, Weixin**
**Shenzhen, Guangdong 518118 (CN)**
- **WANG, Yong**
**Shenzhen, Guangdong 518118 (CN)**
- **LIN, Xionggui**
**Shenzhen, Guangdong 518118 (CN)**
- **GUO, Li**
**Shenzhen, Guangdong 518118 (CN)**
- **JIN, Yanmei**
**Shenzhen, Guangdong 518118 (CN)**

(74) Representative: **Herrero & Asociados, S.L.**
**Edificio Aqua.**
**Calle Agustín de Foxá 4-10**
**28036 Madrid (ES)**

(54) **LITHIUM-ION BATTERY**

(57) In order to overcome the problems of battery expansion and capacity attenuation of the existing lithium ion battery during long-term high-temperature cycle, the application provides a lithium ion battery, which comprises a positive electrode, a negative electrode and a non-aqueous electrolyte, the non-aqueous electrolyte comprise an additive A, an additive B and an additive C; the lithium ion battery satisfies the following condition:

$$0.015 \leq (a+b+c) \times V \leq 0.09;$$

when the lithium ion battery provided by the application meets the condition of $0.015 \leq (a+b+c) \times V \leq 0.09$, the problem of gas production of electrolyte during long-term high-temperature cycle can be effectively solved, and the expansion rate of battery can be effectively reduced. Meanwhile, with catalysis under higher voltage, the additive could undergo special oxidation reaction on the positive electrode surface , forming a more stable and good protective film, which makes the positive electrode better protected, thus effectively improving the long-term high-temperature cycle capacity retention rate of the battery.

EP 4 459 733 A1

# Description

## Technical field

The application belongs to the technical field of energy storage battery devices, and particularly relates to a lithium ion battery.

## Background

Lithium ion battery has been widely used in life as a power supply because of its irreplaceable advantages such as low self-discharge rate, long cycle life, high working voltage and little pollution. It has broad prospects in the fields of mobile communication, notebook computers and new energy vehicles. With the development, users have higher demand for lithium-ion batteries regarding high energy density and fast charging. In the lithium ion battery system, increasing the working voltage and temperature of the battery would lead to different degrees of electrolyte decomposition, thus accelerating the deterioration and failure of the battery performance.

During the first charge and discharge of lithium ion battery, the electrolyte would partially decompose, thus forming a passivation film on the surface of electrode material, which is called solid electrolyte interface (SEI) film. The chemical composition and structure of SEI film play a key role in improving the working voltage, working temperature and cycle life of the battery. Optimizing the composition of SEI film by adding a small amount of additives to the electrolyte is the most economical and convenient method to improve the battery performance.

The existing electrolyte additives include cyclic sulfate, cyclic sultone, silane phosphate, silane borate and fluorinated cyclic carbonate, etc. The inventors found that when the voltage of the lithium battery is ≥4.2V, the combination of cyclic sulfate and/or cyclic sultone compound and silane phosphate and/or silane borate compound, or the combination of cyclic sulfate and/or cyclic sultone compound and fluorinated cyclic carbonate compound is added to the electrolyte. In this case, although the electrolyte has the advantage of low initial impedance, the battery is likely to swell under long-term high-temperature cycle, and there is a problem of poor high-temperature cycle performance. And, the electrolyte added with the combination of silane phosphate and/or silane borate compound and fluorinated cyclic carbonate would lead to the decline of battery capacity retention rate under long-term high-temperature cycle. At the same time, how to suppress high-temperature gas production and reduce safety risks during battery cycle also needs further consideration.

## Summary of the invention

Aiming at the problems that the existing lithium ion battery has capacity retention rate attenuation and battery expansion under long-term high-temperature cycle, the application provides a lithium ion battery.

The technical solutions adopted by the application to solve the technical problems are as follows:

The application provides a lithium ion battery, which comprises a positive electrode, a negative electrode and a non-aqueous electrolyte, wherein the positive electrode comprises a positive electrode material layer, the negative electrode comprises a negative electrode material layer, the negative electrode material layer comprises a negative active material, and the non-aqueous electrolyte comprises an additive A, an additive B and an additive C;
the additive A is selected from one or more of cyclic sulfate compounds and/or cyclic sultone compounds;
the additive B is selected from one or more of silane phosphate compounds and/or silane borate compounds;
the additive C is selected from one or more fluorinated cyclic carbonate compounds;
the lithium ion battery satisfies the following condition:

$$0.015 \leq (a+b+c) \times V \leq 0.09$$

wherein a is a mass ratio of the additive A to the positive active material;
b is a mass ratio of the additive B to the positive active material;
c is a mass ratio of the additive C to the negative active material; and
V is an upper voltage limit of the lithium ion battery.

Preferably, the lithium ion battery satisfies the following condition:

$$0.04 \leq (a+b+c) \times V \leq 0.09.$$

The mass ratio (a) of the additive A to the positive active material is 0.0008-0.012;

the mass ratio (b) of the additive B to the positive active material is 0.0008-0.0022;
the mass ratio (c) of the additive C to the negative active material is 0.001-0.01; and
the upper voltage limit (V) of the lithium ion battery is 4.2V-4.45V.

Preferably, the mass ratio (a) of the additive A to the positive active material is 0.004-0.01;

the mass ratio (b) of the additive B to the positive active material is 0.001-0.002;
the mass ratio (c) of the additive C to the negative active material is 0.0015-0.0085.

Preferably, the cyclic sulfate compound is selected from one or more compounds represented by formula A-1, and the cyclic sultone compound is selected from one or more compounds represented by formula A-2;

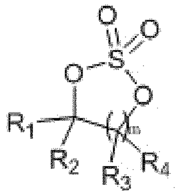
Formula A-1

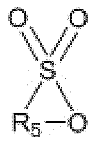
Formula A-2

m is 1 or 2, and $R_1$, $R_2$, $R_3$ and $R_4$ are each independently selected from a hydrogen atom, a halogen atom, a C1-C3 saturated hydrocarbon group, an oxygen-containing hydrocarbon group, a silicon-containing hydrocarbon group or a cyano-containing substituted hydrocarbon group; $R_5$ is selected from a substituted or unsubstituted linear alkylene with 3-5 carbon atoms, and the substituent is selected from one or more of a C1-C3 alkyl group or a halogen atom.

The silane phosphate compound is selected from one or more compounds represented by formula B-1, and the silane borate compound is selected from one or more compounds represented by formula B-2:

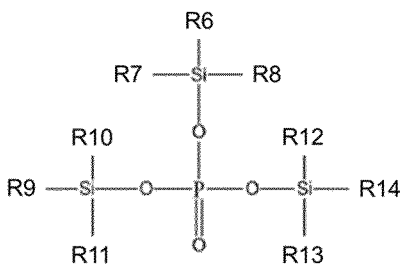
Formula B-1

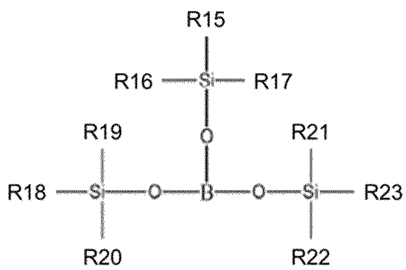
Formula B-2

R6, R7, R8, R9, R10, R11, R12, R13 and R14 are each independently selected from a C1-C6 alkyl group or a halogenated alkyl group, and R15, R16, R17, R18, R19, R20, R21, R22 and R23 are each independently selected from a C1-C6 alkyl group or a halogenated alkyl group.

The fluorinated cyclic carbonate compound is selected from one or more compounds represented by formula C-1:

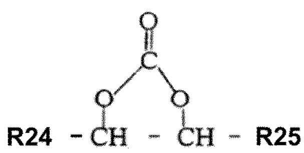
Formula C-1

R24 and R25 are each independently selected from one or more of a hydrogen atom, a fluorine atom or a C1-C3 saturated hydrocarbon group, an oxygen-containing hydrocarbon group or a fluorine-containing substituted hydrocarbon group, and at least one of R24 and R25 contains a fluorine atom.

Preferably, the cyclic sulfate compound is selected from one or more of the following compounds:

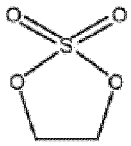
Compound 1

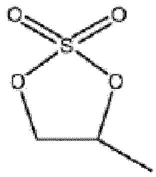
Compound 2

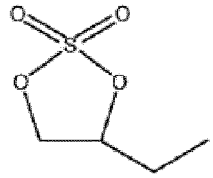
Compound 3

the cyclic sultone compound is selected from one or more of the following compounds:

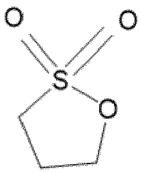
Compound 4

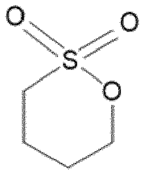
Compound 5

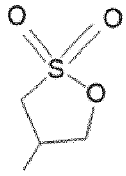
Compound 6

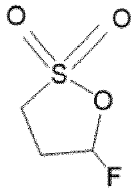
Compound 7

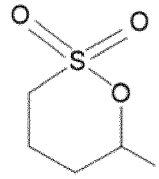
Compound 8

the silane phosphate compound is selected from one or more of the following compounds:

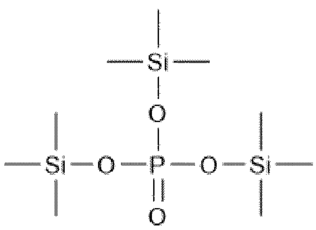
Compound 9

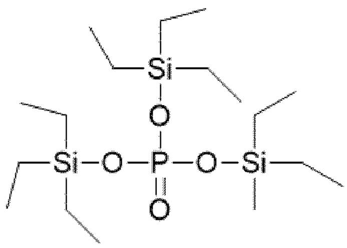
Compound 10

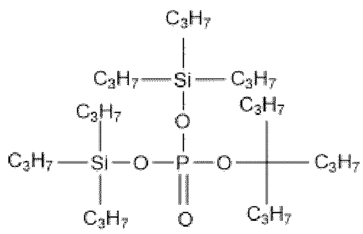
Compound 11

the silane borate compound is selected from one or more of the following compounds:

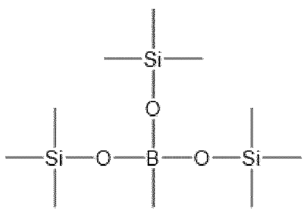
Compound 12

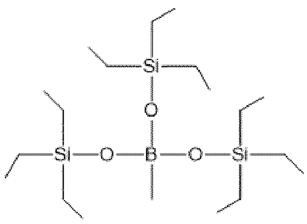
Compound 13

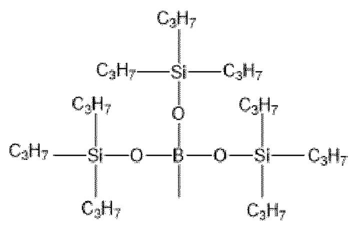
Compound 14.

The fluorinated cyclic carbonate compound is selected from one or more of the following compounds:

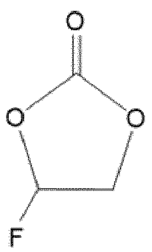 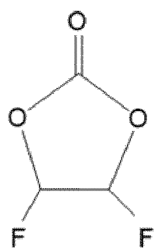 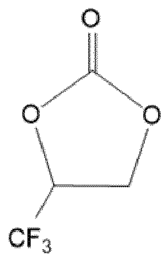 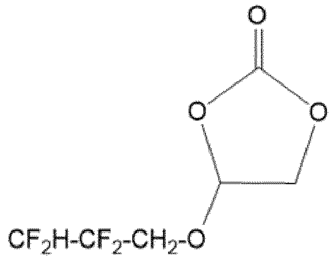

Compound 15 Compound 16 Compound 17 Compound 18.

Preferably, the non-aqueous electrolyte further comprises a lithium salt and an organic solvent, wherein the lithium salt is selected from one or more of $LiPF_6$, $LiPO_2F_2$, $LiBF_4$, LiBOB, $LiClO_4$, $LiCF_3SO_3$, LiDFOB, $LiN(SO_2CF_3)_2$ and $LiN(SO_2F)_2$;
the organic solvent is selected from one or more of carbonate, carboxylate or ether.

Preferably, the carbonate is selected from cyclic carbonate or chain carbonate, and the cyclic carbonate is selected from one or more of vinylene carbonate, propene carbonate, ethylene carbonate and butylene carbonate;

the chain carbonate is selected from one or more of dimethyl carbonate, diethyl carbonate, ethyl methyl carbonate and methyl propyl carbonate;
the carboxylate is selected from one or more of methyl acetate, acetic ether, methyl propionate, ethyl propionate, methyl butyrate, methyl isobutyrate, methyl trimethylacetate and ethyl trimethylacetate;
the ether is selected from one or more of glycol dimethyl ether, 1,3-dioxolame and 1,1,2,2-tetrafluoroethyl -2,2,3,3-tetrafluoropropyl ether;

The concentration of lithium salt in the non-aqueous electrolyte is 0.5-3.5 mol/L, preferably 0.8-2.0 mol/L.

The non-aqueous electrolyte may further include a supplemental additive selected from one or more of unsaturated cyclic carbonate and unsaturated phosphate;
the mass ratio of supplemental additive in the non-aqueous electrolyte is 0.1%-2%.

The unsaturated cyclic carbonate is selected from one or more of vinylene carbonate, vinylethylene carbonate and methylene ethylene carbonate; the unsaturated phosphate is selected from one or two of triallyl phosphate or tripropyl phosphate.

Preferably, the positive active material comprises $LiNi_xCo_yM_zO_2$, wherein $0.5\leq x\leq 1$, $0\leq y\leq 0.5$, $0\leq z\leq 0.5$, $x+y+z\leq 1$, and M is one or more of Mn, Al, Ti, Cr, Mo and Zr; and
the negative active material comprises graphite.

Preferably, the positive electrode material is selected from one or more of $LiNi_{0.8}Co_{0.1}Mn_{0.1}O_2$, $LiNi_{0.7}Co_{0.1}Mn_{0.2}O_2$, $LiNi_{0.6}Co_{0.1}Mn_{0.3}O_2$, $LiNi_{0.6}Co_{0.2}Mn_{0.2}O_2$ and $LiNi_{0.5}Co_{0.2}Mn_{0.3}O_2$; and the graphite is selected from one or more of artificial graphite and natural graphite.

**Beneficial effects**

According to the lithium ion battery provided by the invention, by adding a compound composition of additive A of cyclic sulfate compound and/or cyclic sultone compound, additive B of silane phosphate compound and/or silane borate compound and additive C of fluorinated cyclic carbonate compound into a non-aqueous electrolyte, the inventor unexpectedly found that when the lithium ion battery meets the relation of $0.015\leq (a+b+c)\times V\leq 0.09$, the problem of gas production of the electrolyte under long-term high-temperature cycle can be effectively solved. Through research, the inventor found that the key to improve the high-temperature performance mainly lies in the stability and impedance of the positive and negative SEI. Cyclic sulfate compound and/or cyclic sultone compound can effectively protect the positive electrode, but there is a problem that the film forming resistance of the positive electrode is too large. Because the silane phosphate compound and/or silane borate compound have electron-withdrawing B and ion-transporting P, the SEI of the positive electrode is thinner, the ion transport is better and the impedance is low. However, the protection for the positive electrode is not enough. When both of them exist together, during the charging process, the silane phosphate compound and/or the silane borate compound would first form a film on the positive electrode, forming an inner film with low impedance such as B/P, and the impedance is low. Then the cyclic sulfate compound would further generate a protective layer with component S on the positive electrode, thus further protecting the positive electrode. The ratio of the compounds to the positive active material needs to be strictly controlled, so as to realize the construction of a positive electrode protective film with low impedance and stable structure. At high voltage, the positive electrode

protective layer is reformed with the catalysis of the surface of the positive electrode material, which can form a more stable and good positive electrode SEI film and make the positive electrode better protected. F contained in fluorinated cyclic carbonate can promote the formation of LiF in negative electrode SEI, and the structure is more stable. However, it is unstable at high temperature and likely to generate gas, so it is necessary to strictly control the ratio of it to the negative active material, so that it can be consumed at the negative electrode as much as possible and reduce the residue in the electrolyte. Through a large number of experiments, the inventor found that only when the three materials in of certain proportions to the positive and negative materials ($0.015\leq (a+b+c)\times V\leq 0.09$), they can complement each other to bring effects. The prepared positive electrode protective film contains B/P and S, and the proportion is appropriate, which can ensure both the characteristics of low impedance and stable structure. The formed negative electrode protective film is rich in LiF, and the residual amount of fluoroethylene carbonate in the electrolyte is small, which can effectively avoid the problem of gas production, thus effectively improving the long-term high-temperature cycle capacity retention rate of battery and reducing gas expansion.

**Detailed description of the application**

In order to make the technical problems to be solved, technical solutions and beneficial effects of the present application clearer, the present application will be further described in detail with reference to the following embodiments. It should be understood that the specific embodiments described herein are only used to explain the present application, not intended to limit the present application.

The application provides a lithium ion battery, which comprises a positive electrode, a negative electrode and a non-aqueous electrolyte, wherein the positive electrode comprises a positive electrode material layer, the negative electrode comprises a negative electrode material layer, the negative electrode material layer comprises a negative active material, and the non-aqueous electrolyte comprises an additive A, an additive B and an additive C;

the additive A is selected from one or more of cyclic sulfate compounds and/or cyclic sultone compounds;
the additive B is selected from one or more of silane phosphate compounds and/or silane borate compounds;
the additive C is selected from one or more fluorinated cyclic carbonate compounds;
the lithium ion battery satisfies the following condition:

$$0.015\leq (a+b+c)\times V\leq 0.09$$

wherein a is a mass ratio of the additive A to the positive active material;
b is a mass ratio of the additive B to the positive active material;
c is a mass ratio of the additive C to the negative active material; and
V is an upper voltage limit of the lithium ion battery.

Adding additives such as cyclic sulfate compound and/or cyclic sultone compound into the electrolyte of lithium battery would facilitate the formation of SEI film at the negative electrode interface first, and the remaining unreacted cyclic sulfate compound and/or cyclic sultone compound would react at the positive electrode interface to form a positive electrode protective film. However, the thickness of the positive electrode protective film formed by too many cyclic sulfate compound and/or cyclic sultone compound increases, and the battery impedance increases, which deteriorates the high-temperature performance of the battery. When additives such as silane phosphate and/or silane borate are added to the electrolyte, during the charging and discharging process of the battery, silane phosphate and/or silane borate would first modify the positive electrode interface to form a positive electrode protective film, but its protection for the positive electrode is not enough, and the battery would have the problem of capacity attenuation during the high-temperature cycle. Adding fluorinated cyclic carbonate compound to the electrolyte can better protect the negative electrode and improve the cycle, but it is likely to decompose at high temperature, causing gas production problems.

The inventors found that under the condition that the voltage of the lithium battery is ≥4.2V, when the additives of cyclic sulfate compound and/or cyclic sultone compound and silane phosphate compound and/or silane borate compound are added to the electrolyte of the lithium battery, or the additive cyclic sulfate compound and/or cyclic sultone compound and fluorinated cyclic carbonate compound are added to the electrolyte, during the long-term high-temperature cycle, the gas production of the battery would increase and the battery would swell, which was mainly caused by the accelerated decomposition of electrolyte under the action of electrochemistry. When additives such as silane phosphate compound and/or silane borate compound and fluorinated cyclic carbonate compound are added into the electrolyte of lithium battery,during the long-term high-temperature cycle, with the increase of battery charging and discharging cycles, the loss of active lithium in the positive electrode would increase, and the battery capacity retention rate would gradually decrease.

According to the lithium ion battery provided by the application, the additive A of cyclic sulfate compound and/or cyclic sultone compound, the additive B of silane phosphate compound and/or silane borate compound and the additive C of fluorinated cyclic carbonate compound are added into the non-aqueous electrolyte, and through a great deal of research, it is found that the lithium ion battery can effectively solve the problem of gas production of the electrolyte under long-term high-temperature cycle when the condition of $0.015 \leq (a+b+c) \times V \leq 0.09$ is met, thus effectively reducing the expansion rate of the battery. Meanwhile, the additives A and B with strictly controlled contents modify to form a more stable and good positive electrode protective film under the higher voltage condition of the battery, so that the positive electrode is better protected. The additives C with strictly controlled contents can effectively improve the stability of the negative electrode SEI film, reduce the residue in the electrolyte and reduce the gas production rate, thus effectively improving the long-term high-temperature cycle capacity retention rate of the battery and reducing the battery expansion rate.

In some preferred embodiments, the lithium ion battery meets the following conditions: $0.04 \leq (a+b+c) \times V \leq 0.09$, within this range, the expansion rate of the prepared lithium ion battery is lower, and the long-term high-temperature cycle retention rate of the battery is higher.

In some embodiments, the mass ratio (a) of the additive A to the positive active material is 0.0008-0.012;

the mass ratio (b) of the additive B to the positive active material is 0.0008-0.0022;
the mass ratio (c) of the additive C to the negative active material is 0.001-0.01; and
the upper voltage limit (V) of the lithium ion battery is 4.2V-4.45V.

The lithium ion battery provided by the application is a high-voltage battery, and the upper voltage limit reaches 4.2V or above, i.e., the upper voltage limit of the lithium ion battery is between 4.2v and 4.45v.. The addition amount of additive A and additive B in non-aqueous electrolyte is relative to the mass of positive active material. For example, the mass ratio (a) of additive A to positive active material is 0.0008-0.0012, that is, 0.0008-0.0012g of additive A is added to non-aqueous electrolyte per gram of positive active material. The mass ratio of additive C to negative active material in non-aqueous electrolyte is 0.001-0.01, that is, 0.001-0.01g of additive C is added to non-aqueous electrolyte per gram of negative active material.

In some preferred embodiments, the mass ratio (a) of the additive A to the positive active material is 0.004-0.01;

the mass ratio (b) of the additive B to the positive active material is 0.001-0.002;
the mass ratio (c) of the additive C to the negative active material is 0.0015-0.0085.

In some embodiments, the cyclic sulfate compound is selected from one or more compounds represented by formula A-1;

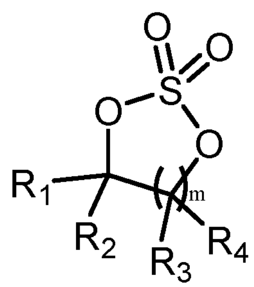

Formula A-1

Wherein m is 1 or 2, and R1, R2, R3 and R4 are independently selected from hydrogen atoms, halogen atoms, C1-C3 saturated hydrocarbon groups, oxygen-containing hydrocarbon groups, silicon-containing hydrocarbon groups or cyano-substituted hydrocarbon groups. Halogen atoms can be selected from fluorine, chlorine, bromine and iodine. The saturated hydrocarbon group with 1-3 carbon atoms can be one or more of methyl, ethyl and propyl as an example of alkyl; Oxygen-containing hydrocarbon groups are those in which hydrogen atoms are replaced by oxygen atoms, such as methoxy; Silicon-containing hydrocarbon group means that hydrogen atom in hydrocarbon group is replaced by silicon atom, and cyano-substituted hydrocarbon group means that hydrogen atom in hydrocarbon group is replaced by cyano -CN.

In some preferred embodiments, the cyclic sulfate compound is selected from one or more of the following compounds:

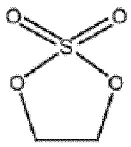

Compound 1

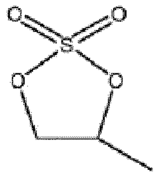

Compound 2

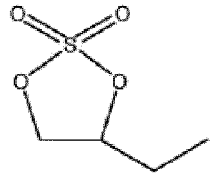

Compound 3.

It should be noted that this application is not limited to the above-mentioned cyclic sulfate compounds, as long as they are within the scope defined by structural formula A-1, they belong to the cyclic sulfate compounds of this application.

In some embodiments, the cyclic sultone compound is selected from one or more compounds represented by formula A-2;

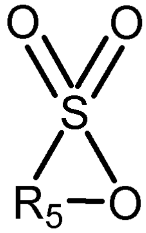

Formula A-2.

$R_5$ is selected from substituted or unsubstituted linear alkylene with 3-5 carbon atoms, wherein the substituent is selected from one or more of alkyl with 1-3 carbon atoms and halogen atoms. The unsubstituted linear alkylene group with 3-5 carbon atoms can be propylene, butylene and pentylene as examples of alkyl groups.

In some preferred embodiments, the cyclic sultone compound is selected from one or more of the following compounds:

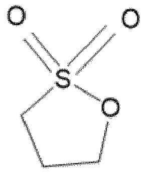

Compound 4

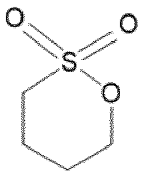

Compound 5

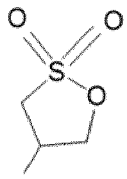

Compound 6

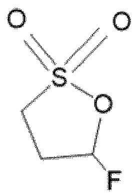

Compound 7

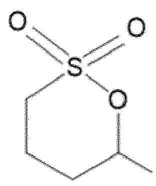

Compound 8.

It should be noted that this application does not limit the types of the above-mentioned cyclic sultone compounds, as long as they are within the scope defined by structural formula A-2, they belong to the types of cyclic sultone compounds in this application.

In some embodiments, the silane phosphate compound is selected from one or more compounds represented by formula B-1, and the silane borate compound is selected from one or more compounds represented by formula B-2:

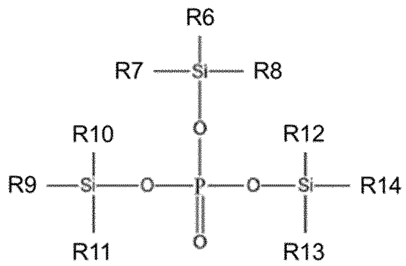

Formula B-1

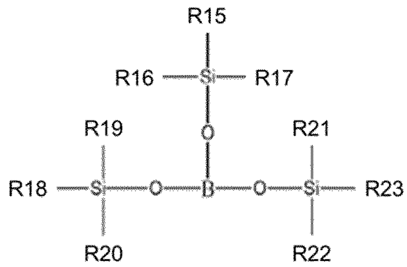

Formula B-2

wherein R6, R7, R8, R9, R10, R11, R12, R13 and R14 are each independently selected from a C1-C6 alkyl group or a halogenated alkyl group, and R15, R16, R17, R18, R19, R20, R21, R22 and R23 are each independently selected from a C1-C6 alkyl group or a halogenated alkyl group.

An alkyl group with 1-6 carbon atoms, which can be a chain alkyl group or a cycloalkyl group, and the hydrogen atom on the ring of the cycloalkyl group can be substituted by an alkyl group. As examples of alkyl groups, methyl, ethyl, n-propyl, isopropyl, n-butyl, isobutyl, sec-butyl, tert-butyl, n-pentyl, isopentyl, neopentyl, hexyl, 2- methyl-pentyl, 3- methyl-pentyl, 1,1,2-trimethylpropyl and 3,3- dimethyl-butyl can be selected.

In some preferred embodiments, the silane phosphate compound is selected from one or more of the following compounds:

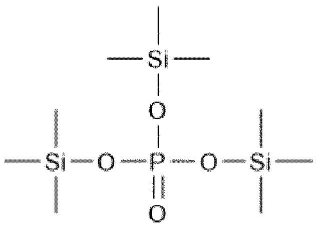

Compound 9

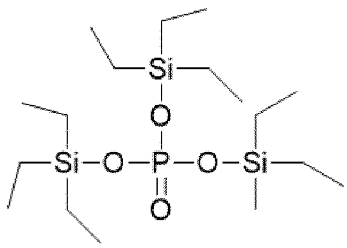

Compound 10

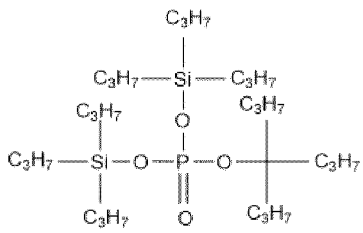

Compound 11.

It should be noted that this application is not limited to the above-mentioned types of silane phosphate compounds, as long as they are within the scope defined by structural formula B-1, they belong to the types of silane phosphate compounds in this application.

the silane borate compound is selected from one or more of the following compounds:

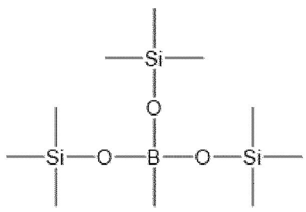

Compound 12

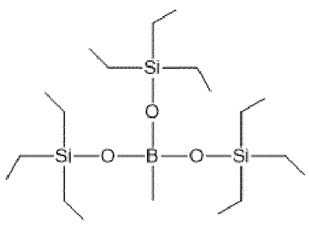

Compound 13

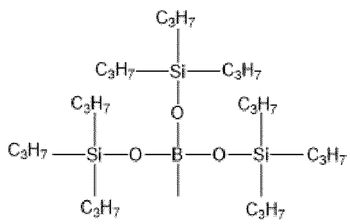

Compound 14.

It should be noted that this application is not limited to the above-mentioned alkyl borate compounds, as long as they are within the scope defined by structural formula B-2, they belong to the alkyl borate compounds of this application.

In some embodiments, the fluorinated cyclic carbonate compound is selected from one or more compounds represented by formula C-1:

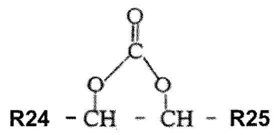

Formula C-1

R24 and R25 are each independently selected from one or more of a hydrogen atom, a fluorine atom or a C1-C3 saturated hydrocarbon group, an oxygen-containing hydrocarbon group or a fluorine-containing substituted hydrocarbon group, and at least one of R24 and R25 contains a fluorine atom.

The fluorinated cyclic carbonate compound is selected from one or more of the following compounds:

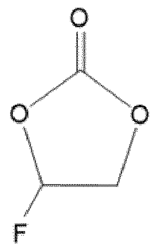

Compound 15

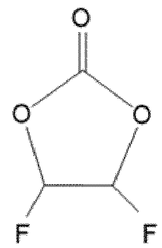

Compound 16

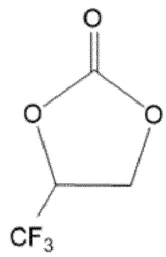

Compound 17

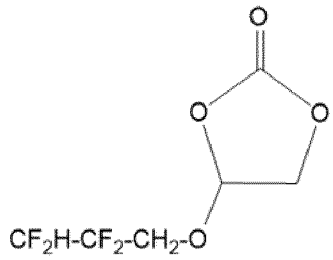

Compound 18.

It should be noted that this application is not limited to the above-mentioned types of fluorinated cyclic carbonate compounds, as long as they are within the scope defined by structural formula C-1.

For the non-aqueous electrolyte, compared with adding only one additive or the combination of other existing additives, the combination of additive A, additive B and additive C can effectively reduce the expansion rate of battery during the long-term high-temperature cycle and solve the problem of gas production during the long-term high-temperature cycle. Meanwhile, under the condition of higher voltage of the battery, additives A and B with strictly controlled contents modify to form a more stable and good positive electrode SEI film, which makes the positive electrode better protected, and additives C with strictly controlled contents can effectively improve the stability of negative electrode SEI. Thereby effectively improving the long-term high-temperature cycle capacity retention rate of the battery.

In some embodiments, the non-aqueous electrolyte further comprises a lithium salt, wherein the lithium salt comprises one or more of $LiPF_6$, $LiPO_2F_2$, $LiBF_4$, LiBOB, $LiClO_4$, $LiCF_3SO_3$, LiDFOB, $LiN(SO_2CF_3)_2$ and $LiN(SO_2F)_2$; the concentration of lithium salt in non-aqueous electrolyte is 0.5 - 3.5 mol/L.

In some preferred embodiments, the concentration of lithium salt in the non-aqueous electrolyte is 0.8-2.0 mol/L.

In the non-aqueous electrolyte, lithium salt contains lithium ions, which is beneficial to the electrochemical reaction of the battery, supplements the consumption of a small amount of lithium ions and promotes the cycle performance of battery during charging and discharging process. In non-aqueous electrolyte, lithium salt affects the conductivity of electrolyte, and plays a role in conducting electrons between the positive and negative electrodes of the battery. The concentration of lithium salt affects the viscosity of the electrolyte. When the concentration of lithium salt increases, the viscosity of the electrolyte increases, the ion transmission rate decreases, the battery polarization increases, the battery impedance increases, and the battery electrical performance decreases.

In some embodiments, the non-aqueous electrolyte further comprises a supplemental additive, which further comprises one or more of unsaturated cyclic carbonate and unsaturated phosphate, and the mass ratio of the supplemental additive in the non-aqueous electrolyte is 0.1%-2%.

In some preferred embodiments, the unsaturated cyclic carbonate is selected from one or more of vinylene carbonate, vinylethylene carbonate and methylene ethylene carbonate; the unsaturated phosphate is selected from one or two of triallyl phosphate or tripropyl phosphate.

Setting the content of supplemental additives in the non-aqueous electrolyte in this range can avoid the decrease of conductivity due to the decrease of dielectric constant of the non-aqueous electrolyte, and easily make the high current discharge characteristics, stability relative to the negative electrode and cycle characteristics of the non-aqueous electrolyte battery reach a good range. It can improve the oxidation/reduction resistance of non-aqueous electrolyte, which is helpful to improve the stability of battery during high-temperature cycle and high temperature storage.

In some embodiments, the non-aqueous electrolyte includes an organic solvent selected from one or more of carbonate, carboxylate and ether.

In some preferred embodiments, the carbonate is selected from cyclic carbonate or chain carbonate, and the cyclic carbonate is selected from one or more of vinylene carbonate, propene carbonate, ethylene carbonate and butylene carbonate;

the chain carbonate is selected from one or more of dimethyl carbonate, diethyl carbonate, ethyl methyl carbonate and methyl propyl carbonate;
the carboxylate is selected from one or more of methyl acetate, acetic ether, methyl propionate, ethyl propionate, methyl butyrate, methyl isobutyrate, methyl trimethylacetate and ethyl trimethylacetate;

The ether is selected from one or more of glycol dimethyl ether, 1,3-dioxolame and 1,1,2,2-tetrafluoroethyl -2,2,3,3- tetrafluoropropyl ether.

In some embodiments, the positive active material comprises $LiNi_xCo_yM_zO_2$, wherein $0.5 \leq x \leq 1$, $0 \leq y \leq 0.5$, $0 \leq z \leq 0.5$, $x+y+z \leq 1$, and M is one or more of Mn, Al, Ti, Cr, Mo and Zr; and the positive electrode material is selected from one or more of $LiNi_{0.8}Co_{0.1}Mn_{0.1}O_2$, $LiNi_{0.7}Co_{0.1}Mn_{0.2}O_2$, $LiNi_{0.6}Co_{0.1}Mn_{0.3}O_2$, $LiNi_{0.6}Co_{0.2}Mn_{0.2}O_2$ and $LiNi_{0.5}Co_{0.2}Mn_{0.3}O_2$.

The negative active material comprises graphite; and the graphite is selected from one or more of artificial graphite and natural graphite.

The positive active material may be selected from graphite, non-graphitized carbon, amorphous carbon, fired polymer compounds (e.g., materials made by firing and carbonizing phenolic resin and furan resin), coke (e.g., pitch coke, needle coke and petroleum coke), carbon fiber, etc.

The present application will be further illustrated with embodiments.

The structural formulas of the compounds represented by additive A, additive B and additive C adopted in the following embodiments and comparative examples are as follows.

| | | | |
|---|---|---|---|
| Additive A | 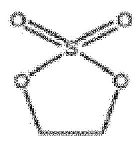 | Additive B | 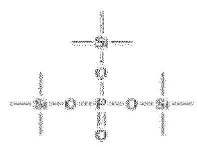 |
| Additive C | 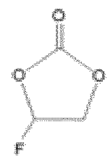 | | |

Embodiments 1-15 and Comparative examples 1-9

This embodiment is used to illustrate the battery and its preparation method disclosed in the present application. For example, $LiNi_{0.6}Co_{0.2}Mn_{0.2}O_2$ is adopted as the positive active material and graphite is adopted as the negative active material. The method includes the following steps.

(1) Preparation of positive plate

The positive active material is $LiNi_{0.6}Co_{0.2}Mn_{0.2}O_2$, and the positive active material, the conductive agent and the binder PVDF were dispersed in the solvent NMP and mixed uniformly to obtain a positive electrode slurry. The positive electrode slurry was evenly coated on the aluminum foil of a positive electrode current collector, then dried, calendered and cut to obtain a positive electrode plate. The mass ratio of positive active material, conductive carbon black and binder PVDF was 97: 1: 2.

(2) Preparation of negative plate

The negative electrode active material graphite, conductive agent, binder CMC and SBR were dispersed in deionized water according to the mass ratio of 95: 1.2: 1.4: 2.4, and stirred to obtain a negative electrode slurry. The negative electrode slurry was evenly coated on the copper foil of a negative electrode current collector, then dried, calendered and cut to obtain a negative electrode plate.

(3) Preparation of electrolyte

The organic solvents EC and EMC are evenly mixed according to the mass ratio of 3:7, then lithium hexafluorophosphate ($LiPF_6$) was added until the molar concentration was 1 mol/L, and then additives A, B and C were added. The addition amounts of additives A, B and C are shown in Table 1. EC is ethylene carbonate and EMC is ethyl methyl carbonate.

(4) Preparation of lithium ion battery

The positive plate, separator and negative plate were laminated in sequence by lamination process, and then a pouch battery was made after top-side sealing and injecting a certain amount of electrolyte.

Performance test

The following performance tests were conducted on the lithium ion battery prepared above.

1. High-temperature cycle performance test

At 45°C, the formed battery was charged to the cut-off voltage with 1C constant current and constant voltage, then charged at constant voltage until the current dropped to 0.05C, and then discharged at 1C constant current to 3.0V, and so on for 1000 cycles. The first discharge capacity and the last discharge capacity were recorded.

The calculation formula of capacity retention rate of high-temperature cycle is as below:

$$\text{Capacity retention rate} = \text{Last discharge capacity/ First discharge capacity} \times 100\%.$$

2. Battery expansion rate after the 1,000th cycle at high temperature

After the first high-temperature cycle test, the battery was immersed in deionized water by Archimedes drainage method at room temperature to test its volume V1. After 1,000 cycles at high temperature, the battery was taken out, and the battery was also immersed in deionized water by Archimedes drainage method at room temperature to test its volume V2;

$$\text{Battery expansion rate} = (V2-V1)/V1*100\%.$$

The battery performance test results of Embodiments 1-15 and Comparative examples 1-9 are shown in Table 1.

Table 1

| Group | Mass ratio (a) of additive A to positive active material | Mass ratio (b) of additive B to positive active material | Mass ratio (c) of additive C to negative active material | Upper voltage limit (v) of lithium battery | (a+b+c ) ×V | 1000 cycles at 45°C, 1C/1C | |
|---|---|---|---|---|---|---|---|
| | | | | | | Capacity retention rate /% | Expansion rate /% |
| Embodiment 1 | 0.002 | 0.0008 | 0.001 | 4.35 | 0.017 | 80.2 | 20 |
| Embodiment 2 | 0.005 | 0.0008 | 0.001 | 4.35 | 0.030 | 82.3 | 18 |
| Embodiment 3 | 0.008 | 0.0008 | 0.001 | 4.35 | 0.043 | 84.1 | 16 |
| Embodiment 4 | 0.01 | 0.001 | 0.0015 | 4.35 | 0.054 | 86.0 | 14 |
| Embodiment 5 | 0.01 | 0.0012 | 0.002 | 4.35 | 0.057 | 88.4 | 12 |

(continued)

| Group | Mass ratio (a) of additive A to positive active material | Mass ratio (b) of additive B to positive active material | Mass ratio (c) of additive C to negative active material | Upper voltage limit (v) of lithium battery | (a+b+c) ×V | 1000 cycles at 45°C, 1C/1C | |
|---|---|---|---|---|---|---|---|
| | | | | | | Capacity retention rate /% | Expansion rate /% |
| Embodiment 6 | 0.01 | 0.0015 | 0.0025 | 4.35 | 0.06 | 89 | 10 |
| Embodiment 7 | 0.01 | 0.0018 | 0.003 | 4.35 | 0.064 | 89.5 | 8 |
| Embodiment 8 | 0.01 | 0.0018 | 0.004 | 4.35 | 0.068 | 90 | 6 |
| Embodiment 9 | 0.01 | 0.0019 | 0.005 | 4.35 | 0.073 | 90.6 | 5 |
| Embodiment 10 | 0.01 | 0.002 | 0.008 | 4.35 | 0.087 | 92.3 | 4 |
| Embodiment 11 | 0.01 | 0.002 | 0.0085 | 4.35 | 0.089 | 92.8 | 4 |
| Embodiment 12 | 0.005 | 0.0015 | 0.005 | 4.15 | 0.048 | 79.2 | 19 |
| Embodiment 13 | 0.005 | 0.0015 | 0.005 | 4.25 | 0.049 | 86.1 | 15 |
| Embodiment 14 | 0.005 | 0.0015 | 0.005 | 4.45 | 0.051 | 89.7 | 8 |
| Embodiment 15 | 0.005 | 0.0015 | 0.005 | 4.5 | 0.052 | 73.4 | 26 |
| Embodiment 16 | 0.005 | 0.0015 | 0.005 | 4.35 | 0.050 | 86.8 | 9 |
| Comparative example 1 | 0.005 | | | 4.35 | 0.022 | 50.7 | 60 |
| Comparative example 2 | | 0.0015 | | 4.35 | 0.007 | 40.2 | 60 |
| Comparative example 3 | | | 0.005 | 4.35 | 0.022 | 48.7 | 70 |
| Comparative example 4 | 0.005 | 0.0015 | | 4.35 | 0.028 | 55.1 | 50 |
| Comparative example 5 | 0.005 | | 0.005 | 4.35 | 0.044 | 55.9 | 50 |
| Comparative example 6 | | 0.0015 | 0.005 | 4.35 | 0.028 | 60.2 | 40 |
| Comparative example 7 | 0.0008 | 0.0008 | 0.001 | 4.35 | 0.011 | 63.5 | 37 |
| Comparative example 8 | 0.001 | 0.0008 | 0.001 | 4.35 | 0.012 | 68.7 | 35 |
| Comparative example 9 | 0.01 | 0.002 | 0.01 | 4.35 | 0.096 | 75.6 | 31 |

(continued)

| Group | Mass ratio (a) of additive A to positive active material | Mass ratio (b) of additive B to positive active material | Mass ratio (c) of additive C to negative active material | Upper voltage limit (v) of lithium battery | (a+b+c ) ×V | 1000 cycles at 45°C, 1C/1C | |
|---|---|---|---|---|---|---|---|
| | | | | | | Capacity retention rate /% | Expansion rate /% |
| Comparative example 10 | 0.01 | 0.002 | 0.01 | 4.15 | 0.091 | 70.1 | 29 |
| Comparative example 11 | 0.01 | 0.002 | 0.01 | 4.5 | 0.099 | 65.4 | 35 |

From the test results of Embodiments 1-16 and Comparative examples 1-11, it can be seen that when the additive A with the mass ratio (a) to the positive active material, the additive B with the mass ratio (b) to the positive active material and the additive C with the mass ratio (c) in the non-aqueous electrolyte of lithium ion battery satisfy the relationship of 0.015≤ (a+b+c) ×V≤0.09, the lithium ion battery has higher high-temperature cycle capacity retention rate and lower expansion rate under long-term high-temperature cycle.

According to the test results of Embodiments 1-11, when the lithium ion battery meets the preset relationship of 0.015≤ (a+b+c) ×V≤0.09, with the increase of the value of (a+b+c)×V, the high-temperature cycle performance of the lithium ion battery gradually increases, and the expansion rate of battery gradually decreases under long-term high-temperature cycle. It indicates that the addition of additives A, B and C in the electrolyte can effectively reduce the expansion rate of battery under long-term high-temperature cycle and improve the capacity retention rate of battery under high-temperature cycle. Especially, under the condition of 0.04≤ (a+b+c) ×V≤0.09, the expansion rate of lithium ion battery is low and the high-temperature cycle capacity retention rate is high.

Compared with Comparative examples 1-6, Embodiment 16 shows that the long-term high-temperature cycle capacity retention rate of lithium ion battery is low and the expansion rate of battery is higher when additive A, additive B or additive C is added to the non-aqueous electrolyte alone. On the one hand, adding additive A+ additive B, or additive B+ additive C, or additive A+ additive C to the non-aqueous electrolyte, the battery would still have low high-temperature cycle performance and high expansion rate. On the other hand, adding additives A, B and C into the electrolyte at the same time can greatly improve the long-term high-temperature cycle capacity retention rate of battery, and meanwhile significantly reduce the expansion rate of battery. It indicates that when additive A, additive B and additive C are added to the non-aqueous electrolyte at the same time, a special oxidation reaction would occur on the surface of the positive electrode with catalysis under high voltage of the battery, forming a more stable and good positive electrode protective film, which makes the positive electrode better protected, thus effectively improving the long-term high-temperature cycle capacity retention rate of the battery. Meanwhile, it can effectively solve the problem of gas production of electrolyte under long-term high-temperature cycle and effectively reduce the expansion rate of battery.

Compared with Comparative examples 7-8, Embodiments 1-16 show that although the mass ratio (a) of additive A to positive active material is in the range of 0.0008-0.001, the overall contents of additive A, additive B and additive C in the electrolyte are not high, which can not effectively prevent the decomposition of the electrolyte during the long-term high-temperature cycle of battery, and can not form a stable and good positive protective film on the positive electrode surface, so the expansion rate of battery would increase and the capacity retention rate would decrease under the long-term high-temperature cycle. In Embodiments 1-16 and Comparative example 9, the addition amounts of additive A, additive B and additive C all meet the range requirements of this application, but they do not meet the range requirements of (a+b+c)×V, so the three additives cannot achieve a good balance. Although the high-temperature cycle performance of battery has been improved, it may be that a positive protective film could be formed at the positive electrode interface, but the decomposition of electrolyte can not be better prevented, and the expansion rate of battery is still high.

Comparing Embodiment 12 with Comparative example 10, it can be concluded that the addition amounts of additive A, additive B and additive C all meet the range requirements of this application and the range requirements of (a+b+c)×V However, when the voltage is not within the range of 4.2-4.45V, i.e., at low voltage, it also has certain improvement effect on the high-temperature capacity retention rate and expansion rate of battery. Comparing Embodiment 15 with Comparative example 11, it is concluded that at high voltage (i.e., when the voltage is greater than 4.45V), the high-temperature cycle performance and expansion rate of battery are also improved to some extent. By comparison of Embodiments 12-16, it is found that the additive A, additive B, additive C and voltage are all within the preset range of this application. And when the range requirements of (a+b+c)×V are met, the high-temperature cycle capacity retention rate of the battery can be obviously improved, and the expansion rate of the battery under long-term high-temperature cycle can be effectively reduced. Embodiments 12-16 and comparative examples 10-11 show that with catalysis under

the high-voltage range of 4.2-4.45V, the electrolyte could undergo a special oxidation reaction on the surface of the positive electrode, forming a more stable and good positive electrode protective film, which makes the positive electrode better protected, thus effectively improving the long-term high-temperature cycle capacity retention rate of battery. Meanwhile, it can effectively solve the problem of gas production of electrolyte under long-term high-temperature cycle and effectively reduce the expansion rate of battery. Embodiments 17-20

Embodiments 17-20 are different from Embodiment 16 in that the positive active materials are different. Other steps of the preparation method are the same. The specific addition amounts of additives A, B and C of non-aqueous electrolyte in Embodiments 17-20 are shown in Table 2. Battery performance test data of Embodiments 17-20 are shown in Table 3.

Table 2

| Group | Mass ratio (a) of additive A to positive active material | Mass ratio (b) of additive B to positive active material | Mass ratio (c) of additive C to negative active material | Upper voltage limit(v)of lithium battery | (a+b+c) ×V | Positive active material |
|---|---|---|---|---|---|---|
| Embodiment 16 | 0.005 | 0.0015 | 0.005 | 4.35 | 0.050 | $LiNi_{0.6}Co_{0.2}Mn_{0.2}O_2$ |
| Embodiment 17 | 0.005 | 0.0015 | 0.005 | 4.35 | 0.050 | $LiNi_{0.33}Co_{0.33}Mn_{0.33}O_2$ |
| Embodiment 18 | 0.005 | 0.0015 | 0.005 | 4.35 | 0.050 | $LiNi_{0.5}Co_{0.2}Mn_{0.3}O_2$ |
| Embodiment 19 | 0.005 | 0.0015 | 0.005 | 4.35 | 0.050 | $LiNi_{0.7}Co_{0.1}Mn_{0.2}O_2$ |
| Embodiment 20 | 0.005 | 0.0015 | 0.005 | 4.35 | 0.050 | $LiNi_{0.8}Co_{0.1}Mn_{0.1}O_2$ |

Table 3

| Group | 1000 cycles at 45°C, 1C/1C | |
|---|---|---|
| | Capacity retention rate /% | Expansion rate /% |
| Embodiment 16 | 86.8 | 9 |
| Embodiment 17 | 88.0 | 6 |
| Embodiment 18 | 87.2 | 7 |
| Embodiment 19 | 84.6 | 11 |
| Embodiment 20 | 83.2 | 16 |

From Table 2 and Table 3, it can be seen that different types of active materials may be selected for lithium ion batteries, as long as additive A, additive B and additive C in non-aqueous electrolyte meet the relationship of $0.015 \leq (a+b+c) \times V \leq 0.09$. They have similar functions, which can effectively solve the problem of gas production in electrolyte under long-term high-temperature cycle and effectively reduce the battery expansion rate. At the same time, with catalysis under higher voltage, the additive could undergo a special oxidation reaction on the surface of the positive electrode, forming a more stable and good positive electrode protective film, which makes the positive electrode better protected, thus effectively improving the long-term high-temperature cycle capacity retention rate of battery. It indicates that the relational expression of additive A, additive B and additive C for non-aqueous electrolyte provided by the application are applicable to different types of positive active materials.

Embodiments 21-24

Embodiments 21-23 are different from Embodiment 16 in that the structural formulas of additives A, B and C in non-aqueous electrolyte are different. Other steps of the preparation methods are the same. The specific addition

amounts of additives A, B and C of non-aqueous electrolyte in Embodiments 21-23 are shown in Table 5. Battery performance test data of Embodiments 17-20 are shown in Table 6.

The structural formulas of additive A, additive B and additive C adopted for Embodiments 21-23 are different, as shown in Table 4 below.

Table 4

| | Structural formula of additive A | Structural formula of additive B | Structural formula of additive C |
|---|---|---|---|
| Embodiment 21 | 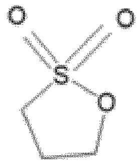 | 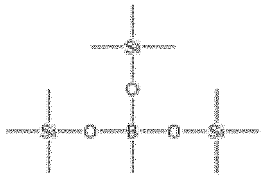 | 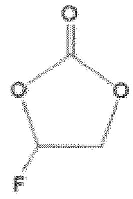 |
| Embodiment 22 | 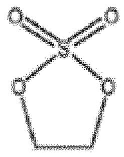 | 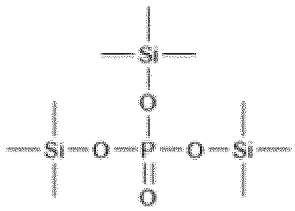 | 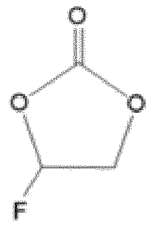 |
| Embodiment 23 | 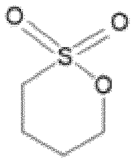 | 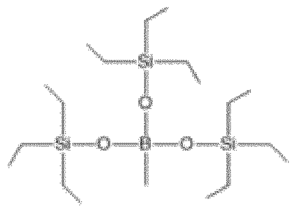 | 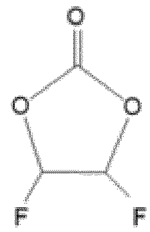 |

Table 5

| Group | Mass ratio (a) of additive A to positive active material | Mass ratio (b) of additive B to positive active material | Mass ratio (c) of additive C to negative active material | Upper voltage limit (v) of lithium battery | (a+b+c) ×V |
|---|---|---|---|---|---|
| Embodiment 16 | 0.005 | 0.0015 | 0.005 | 4.35 | 0.050 |
| Embodiment 21 | 0.005 | 0.0015 | 0.005 | 4.35 | 0.050 |
| Embodiment 22 | 0.005 | 0.0015 | 0.005 | 4.35 | 0.050 |
| Embodiment 23 | 0.005 | 0.0015 | 0.005 | 4.35 | 0.050 |

Table 6

| Group | 1000 cycles at 45°C, 1C/1C | |
|---|---|---|
| | Capacity retention rate /% | Expansion rate /% |
| Embodiment 16 | 86.8 | 9 |

(continued)

| Group | 1000 cycles at 45°C, 1C/1C | |
|---|---|---|
| | Capacity retention rate /% | Expansion rate /% |
| Embodiment 21 | 86.5 | 8 |
| Embodiment 22 | 86.1 | 10 |
| Embodiment 23 | 87.1 | 8 |

It can be seen from Table 4-6 that the additives A, B and C in the non-aqueous electrolyte have different structures. As long as the additives A, B and C in the non-aqueous electrolyte meet the relationship of $0.015 \leq (a+b+c) \times V \leq 0.09$, they have similar functions, which can effectively solve the problem of gas production in the electrolyte under long-term high-temperature cycle and effectively reduce the battery expansion rate. At the same time, with catalysis under higher voltage, the additive could undergo a special oxidation reaction on the surface of the positive electrode, forming a more stable and good positive electrode protective film, which makes the positive electrode better protected, thus effectively improving the long-term high-temperature cycle capacity retention rate of battery.

The above are merely preferred embodiments and are not intended to limit the present application. Any modifications, equivalent substitutions and improvements made within the spirit and principles of the present application shall be included within the scope of protection of the present application. Further, unless otherwise required by context, singular terms shall include pluralities and plural terms shall include the singular.

## Claims

**1.** A lithium ion battery, comprising a positive electrode, a negative electrode and a non-aqueous electrolyte, wherein the positive electrode comprises a positive electrode material layer, the positive electrode material layer comprises a positive active material, and the negative electrode material layer comprises a negative active material, and the non-aqueous electrolyte comprises an additive A, an additive B and an additive C;

the additive A is selected from one or more of cyclic sulfate compounds and/or cyclic sultone compounds;
the additive B is selected from one or more of silane phosphate compounds and/or silane borate compounds;
the additive C is selected from one or more fluorinated cyclic carbonate compounds;
the lithium ion battery satisfies the following condition:

$$0.015 \leq (a+b+c) \times V \leq 0.09,$$

wherein a is a mass ratio of the additive A to the positive active material;
b is a mass ratio of the additive B to the positive active material;
c is a mass ratio of the additive C to the negative active material; and
V is an upper voltage limit of the lithium ion battery.

**2.** The lithium ion battery of claim 1, wherein the lithium ion battery satisfies the following condition:

$$0.04 \leq (a+b+c) \times V \leq 0.09.$$

**3.** The lithium ion battery of claim 1, wherein the mass ratio (a) of the additive A to the positive active material is 0.0008-0.012;

the mass ratio (b) of the additive B to the positive active material is 0.0008-0.0022;
the mass ratio (c) of the additive C to the negative active material is 0.001-0.01; and
the upper voltage limit (V) of the lithium ion battery is 4.2V-4.45V.

**4.** The lithium ion battery of claim 3, wherein the mass ratio (a) of the additive A to the positive active material is 0.004-0.01;

the mass ratio (b) of the additive B to the positive active material is 0.001-0.002; and the mass ratio (c) of the additive C to the negative active material is 0.0015-0.0085.

5. The lithium ion battery of claim 1, wherein the cyclic sulfate compound is selected from one or more compounds represented by formula A-1, and the cyclic sultone compound is selected from one or more compounds represented by formula A-2;

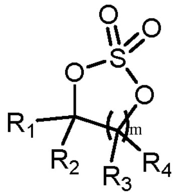
Formula A-1

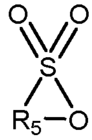
Formula A-2

wherein m is 1 or 2, and $R_1$, $R_2$, $R_3$ and $R_4$ are each independently selected from a hydrogen atom, a halogen atom, a C1-C3 saturated hydrocarbon group, an oxygen-containing hydrocarbon group, a silicon-containing hydrocarbon group or a cyano-containing substituted hydrocarbon group; $R_5$ is selected from a substituted or unsubstituted linear alkylene with 3-5 carbon atoms, and the substituent is selected from one or more of a C1-C3 alkyl group or a halogen atom.

6. The lithium ion battery of claim 5, wherein the cyclic sulfate compound is selected from one or more of the following compounds:

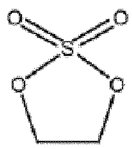
Compound 1

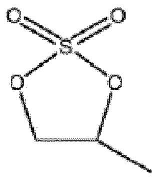
Compound 2

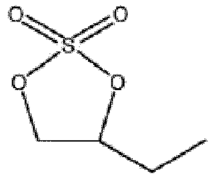
Compound 3

the cyclic sultone compound is selected from one or more of the following compounds:

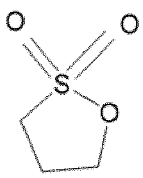
Compound 4

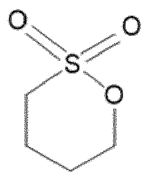
Compound 5

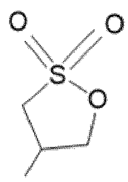
Compound 6

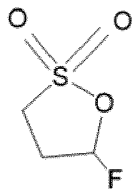
Compound 7

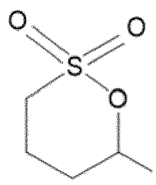
Compound 8.

7. The lithium ion battery of claim 1, wherein the silane phosphate compound is selected from one or more compounds represented by formula B-1, and the silane borate compound is selected from one or more compounds represented by formula B-2:

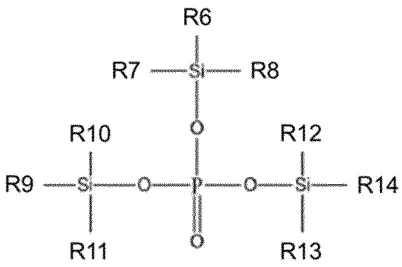

Formula B-1

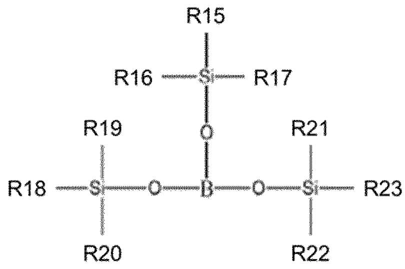

Formula B-2

wherein R6, R7, R8, R9, R10, R11, R12, R13 and R14 are each independently selected from a C1-C6 alkyl group or a halogenated alkyl group, and R15, R16, R17, R18, R19, R20, R21, R22 and R23 are each independently selected from a C1-C6 alkyl group or a halogenated alkyl group.

**8.** The lithium ion battery of claim 7, wherein the silane phosphate compound is selected from one or more of the following compounds:

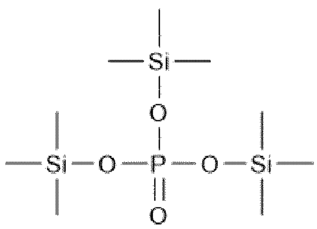

Compound 9

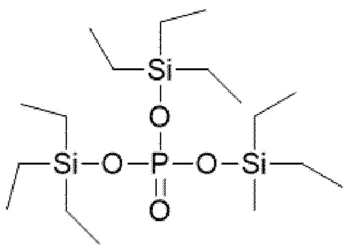

Compound 10

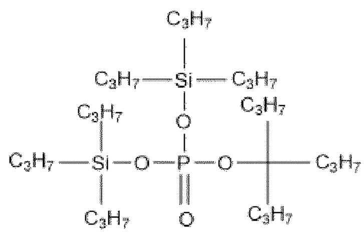

Compound 11

the silane borate compound is selected from one or more of the following compounds:

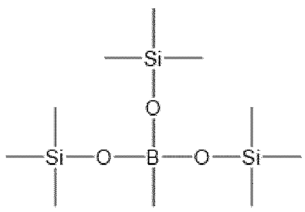

Compound 12

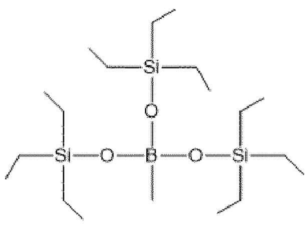

Compound 13

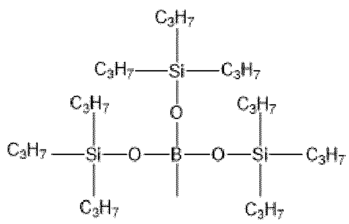

Compound 14.

**9.** The lithium ion battery of claim 1, wherein the fluorinated cyclic carbonate compound is selected from one or more compounds represented by formula C-1:

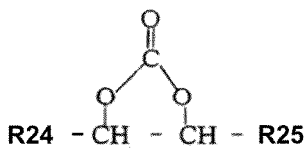

Formula C-1

wherein, R24 and R25 are each independently selected from one or more of a hydrogen atom, a fluorine atom or a C1-C3 saturated hydrocarbon group, an oxygen-containing hydrocarbon group or a fluorine-containing substituted hydrocarbon group, and at least one of R24 and R25 contains a fluorine atom.

**10.** The lithium ion battery of claim 9, wherein the fluorinated cyclic carbonate compound is selected from one or more of the following compounds:

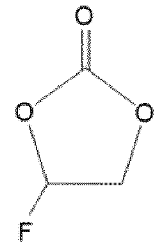 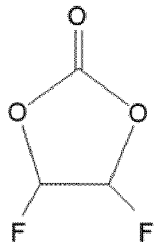 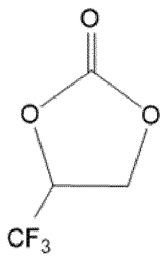 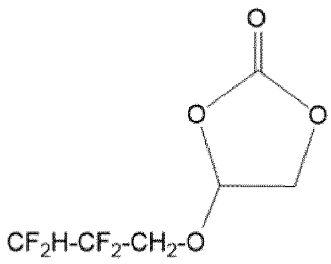

Compound 15 Compound 16 Compound 17 Compound 18.

**11.** The lithium ion battery of claim 1, wherein the non-aqueous electrolyte further comprises a lithium salt and an organic solvent, wherein the lithium salt comprises one or more of $LiPF_6$, $LiPO_2F_2$, $LiBF_4$, LiBOB, $LiClO_4$, $LiCF_3SO_3$, LiDFOB, $LiN(SO_2CF_3)_2$ and $LiN(SO_2F)_2$;
the organic solvent is selected from one or more of carbonate, carboxylate or ether.

**12.** The lithium ion battery of claim 11, wherein the carbonate is selected from cyclic carbonate or chain carbonate, and the cyclic carbonate is selected from one or more of vinylene carbonate, propene carbonate, ethylene carbonate and butylene carbonate;

the chain carbonate is selected from one or more of dimethyl carbonate, diethyl carbonate, ethyl methyl carbonate and methyl propyl carbonate;
the carboxylate is selected from one or more of methyl acetate, acetic ether, methyl propionate, ethyl propionate, methyl butyrate, methyl isobutyrate, methyl trimethylacetate and ethyl trimethylacetate;
the ether is selected from one or more of glycol dimethyl ether, 1,3-dioxolame and 1,1,2,2-tetrafluoroethyl -2,2,3,3- tetrafluoropropyl ether;
a concentration of the lithium salt in the non-aqueous electrolyte is 0.5-3.5 mol/L.

**13.** The lithium ion battery of claim 1, wherein the positive active material comprises $LiNi_xCo_yM_zO_2$, wherein $0.5 \le x \le 1$, $0 \le y \le 0.5$, $0 \le z \le 0.5$, $x+y+z \le 1$, and M is one or more of Mn, Al, Ti, Cr, Mo and Zr;
the negative active material comprises graphite.

**14.** The lithium ion battery of claim 13, wherein the positive electrode material is selected from one or more of $LiNi_{0.8}Co_{0.1}Mn_{0.1}O_2$, $LiNi_{0.7}Co_{0.1}Mn_{0.2}O_2$, $LiNi_{0.6}Co_{0.1}Mn_{0.3}O_2$, $LiNi_{0.6}Co_{0.2}Mn_{0.2}O_2$ and $LiNi_{0.5}Co_{0.2}Mn_{0.3}O_2$; and the graphite is selected from one or more of artificial graphite and natural graphite.

## INTERNATIONAL SEARCH REPORT

International application No.
**PCT/CN2022/138541**

**A. CLASSIFICATION OF SUBJECT MATTER**

H01M10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS, CNTXT, ENTXTC, VEN, CNKI: 锂离子电池, 电解液, 氟, 硅烷, 磷酸酯, 环状, 硫酸酯, 碳酸酯, electrolytic, lithium ion battery, cyclic, carbonate, sulfate, fluorine, silanophosphate

**C. DOCUMENTS CONSIDERED TO BE RELEVANT**

| Category* | Citation of document, with indication, where appropriate, of the relevant passages | Relevant to claim No. |
|---|---|---|
| A | CN 112271337 A (SHENZHEN CAPCHEM TECHNOLOGY CO., LTD.) 26 January 2021 (2021-01-26)<br>description, paragraphs [0037]-[0129] | 1-14 |
| A | CN 109326823 A (SHENZHEN CAPCHEM TECHNOLOGY CO., LTD.) 12 February 2019 (2019-02-12)<br>entire document | 1-14 |
| A | CN 103797635 A (ADEKA CORPORATION) 14 May 2014 (2014-05-14)<br>entire document | 1-14 |
| A | CN 111129600 A (NINGDE CONTEMPORARY AMPEREX TECHNOLOGY CO., LTD.) 08 May 2020 (2020-05-08)<br>entire document | 1-14 |
| A | CN 112310467 A (SHENZHEN CAPCHEM TECHNOLOGY CO., LTD.) 02 February 2021 (2021-02-02)<br>entire document | 1-14 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 February 2023** | **07 March 2023** |

Name and mailing address of the ISA/CN
**China National Intellectual Property Administration (ISA/CN)**
**China No. 6, Xitucheng Road, Jimenqiao, Haidian District, Beijing 100088**
Facsimile No. **(86-10)62019451**

Authorized officer

Telephone No.

**INTERNATIONAL SEARCH REPORT**

International application No.
**PCT/CN2022/138541**

**C. DOCUMENTS CONSIDERED TO BE RELEVANT**

| Category* | Citation of document, with indication, where appropriate, of the relevant passages | Relevant to claim No. |
|---|---|---|
| A | US 2018241078 A1 (CONTEMPORARY AMPEREX TECHNOLOGY CO., LTD.) 23 August 2018 (2018-08-23) entire document | 1-14 |

Form PCT/ISA/210 (second sheet) (July 2022)

**INTERNATIONAL SEARCH REPORT**
**Information on patent family members**

International application No.
**PCT/CN2022/138541**

| Patent document cited in search report | | | Publication date (day/month/year) | Patent family member(s) | | | Publication date (day/month/year) |
|---|---|---|---|---|---|---|---|
| CN | 112271337 | A | 26 January 2021 | None | | | |
| CN | 109326823 | A | 12 February 2019 | WO | 2019024408 | A1 | 07 February 2019 |
| | | | | US | 2020168953 | A1 | 28 May 2020 |
| | | | | US | 11380937 | B2 | 05 July 2022 |
| | | | | EP | 3664211 | A1 | 10 June 2020 |
| | | | | EP | 3664211 | A4 | 16 September 2020 |
| | | | | EP | 3664211 | B1 | 23 June 2021 |
| CN | 103797635 | A | 14 May 2014 | EP | 2775559 | A1 | 10 September 2014 |
| | | | | EP | 2775559 | A4 | 01 July 2015 |
| | | | | EP | 2775559 | B1 | 06 July 2016 |
| | | | | US | 2015044551 | A1 | 12 February 2015 |
| | | | | US | 9337511 | B2 | 10 May 2016 |
| | | | | WO | 2013065723 | A1 | 10 May 2013 |
| | | | | JP | 2013118168 | A | 13 June 2013 |
| | | | | JP | 5955629 | B2 | 20 July 2016 |
| | | | | KR | 20140096259 | A | 05 August 2014 |
| | | | | KR | 101947516 | B1 | 13 February 2019 |
| CN | 111129600 | A | 08 May 2020 | None | | | |
| CN | 112310467 | A | 02 February 2021 | None | | | |
| US | 2018241078 | A1 | 23 August 2018 | EP | 3367491 | A1 | 29 August 2018 |
| | | | | EP | 3367491 | B1 | 21 August 2019 |

Form PCT/ISA/210 (patent family annex) (July 2022)